Europäisches Patentamt

European Patent Office

Office européen des brevets

(11) Publication number: **0 393 851**

**A1**

# EUROPEAN PATENT APPLICATION

(21) Application number: **90303113.6**

(22) Date of filing: **22.03.90**

(51) Int. Cl.5: **G02F 1/136, H01C 7/10**

(30) Priority: **28.03.89 JP 75565/89**

(43) Date of publication of application:
**24.10.90 Bulletin 90/43**

(84) Designated Contracting States:
**DE FR GB IT**

(71) Applicant: **SEIKO INSTRUMENTS INC.**
**31-1, Kameido 6-chome Koto-ku**
**Tokyo 136(JP)**

(72) Inventor: **Motte, Shunichi, c/o Seiko**
**Instruments Inc.**
**31-1 Kameido 6-chome, Koto-ku**
**Tokyo(JP)**
Inventor: **Yamazaki, Tsuneo, c/o Seiko**
**Instruments Inc.**
**31-1 Kameido 6-chome, Koto-ku**
**Tokyo(JP)**

(74) Representative: **Caro, William Egerton et al**
**J. MILLER & CO. Lincoln House 296-302 High**
**Holborn**
**London WC1V 7JH(GB)**

(54) **A method of manufacturing a non-linear resistive element array.**

(57) A method of manufacturing a non-linear resistive element array comprises forming on a substrate (1) an array of non-linear resistive elements, each having a picture element electrode (2), a non-linear resistive layer (3) on the picture element electrode, and a conductive layer (4) on the non-linear resistive layer, and further comprising etching the picture element electrodes and the conductive layer again after the formation of the non-linear resistive element array whereby to remove short circuiting between the picture element electrodes and unetched remainders of the picture element electrodes and the conductive layer.

FIG. 1A

FIG. 1B

FIG. 1C

FIG. 1D

## A METHOD OF MANUFACTURING A NON-LINEAR RESISTIVE ELEMENT ARRAY

The present invention relates to a method of manufacturing a non-linear resistive element array, which may be combined with an electro-optical material such as a liquid crystal or the like to form an electro-optical device, for example, an image display device, a shutter for a printer or the like.

The conventional method of manufacturing a non-linear resistive element array is as follows: On a transparent insulating substrate of glass, quartz or the like, picture element electrodes, which are formed of a transparent conductive film of indium-tin oxide (ITO) or the like, are formed by a first photo-lithographic step, and subsequently a non-linear resistive film is stacked and has its pattern formed by a second photo-lithographic step. Next, a metal film of Or, Al or the like for providing row or column electrodes is stacked by sputtering or the like and is patterned by a third photo-lithographic step.

In such a prior art method of manufacturing the non-linear resistive element array, when the picture element electrodes and the metal film are formed photo-lithographically, there often occurs the problem that the desired patterns are not obtained over the whole substrate due to, e.g. foreign matter adhering to the substrate, foreign matter adhering to a mask, or foreign matter mixing in a resist. The adhesion of the foreign matter may result in short circuiting between the picture element electrodes or in unetched remainders on the picture element electrodes or in the metal film.

When the array thus formed is used for constructing an image display device in combination with a liquid crystal material or the like, there arises the defect that a signal may be written into an undesired pixel or that a signal may even be written into an adjacent pixel on account of the short circuiting between the picture element electrodes.

Further, when the non-linear resistive element array is combined with the liquid crystal material and is employed as an image display device or the like, a large number of non-linear resistive cells are usually constructed on the substrate and it has hitherto been difficult to increase the available percentage.

The present invention seeks to solve the above problems by providing a method of manufacturing a non-linear resistive element array, which avoids short circuiting between the picture element electrodes and unetched remainders in the picture element electrodes and conductive film.

In accordance with the present invention, there is provided a method of manufacturing a non-linear resistive element array comprising forming on a substrate an array of non-linear resistive elements, each having a picture element electrode, a non-linear resistive layer on the picture element electrode, and a conductive layer on the non-linear resistive layer, and characterised by etching the picture element electrodes and the conductive layer effective to form them in a desired shape by removing unnecessary parts.

The invention comprises the step of etching the picture element electrodes and the conductive film again after the initial formation of the non-linear resistive element array.

The unetched remainders and the short circuiting between the picture element electrodes, which are ascribable to foreign matter etc. and which arise in forming the picture element electrodes and the conductive film photo-lithographically, can be suppressed by etching the picture element electrodes and the conductive film again as described above. Accordingly, the available percentage of the non-linear resistive element array is enhanced, so that a non-linear resistive element array of high reliability can be realised together with a reduction in the cost of manufacture.

In a preferred embodiment, the method of manufacturing the non-linear resistive element array comprises depositing a first conductive layer on the substrate and selectively forming the first conductive layer in a desired pattern by a photo-etching process to thereby form the picture element electrodes, depositing the non-linear resistive layer on the picture element electrodes and the second conductive layer on the non-linear resistive layer successively, and selectively forming the non-linear resistive layer and the second conductive layer in a desired pattern by another photo-etching process.

The invention is described further, by way of example, with reference to the accompanying drawings, in which:-

Figures 1A to 1D are plan views illustrating the sequence of steps in a method of manufacturing a non-linear resistive element array according to the present invention; and

Figures 2A to 2D are sectional views taken along the line X - X' in each of the plan views of Figures 1A to 1D respectively.

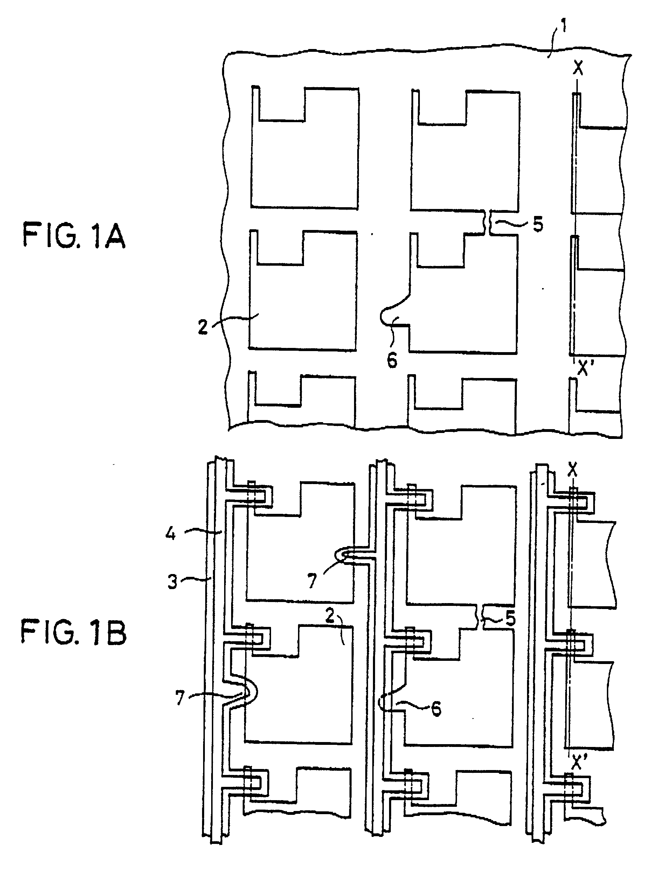

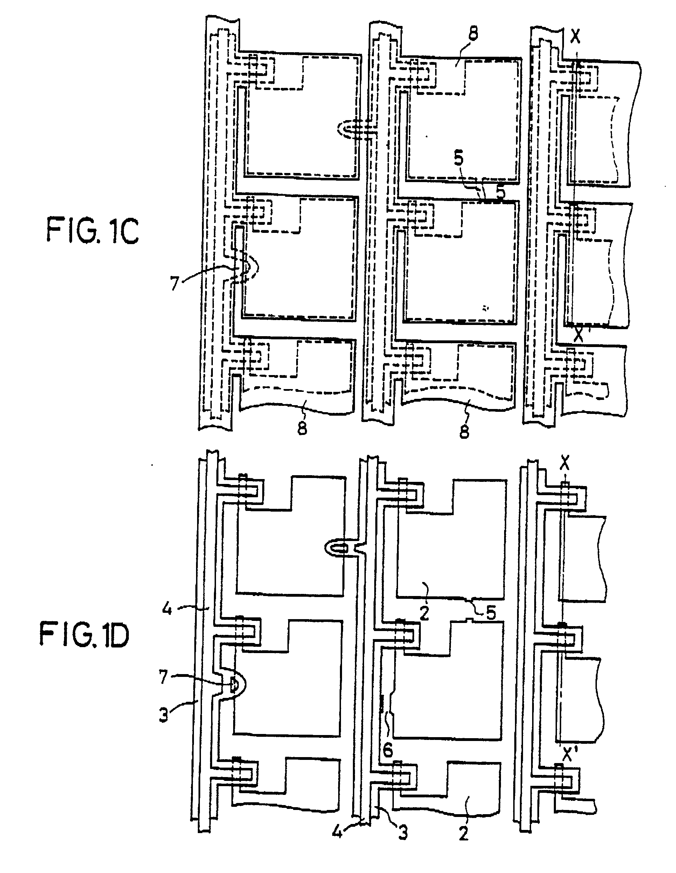

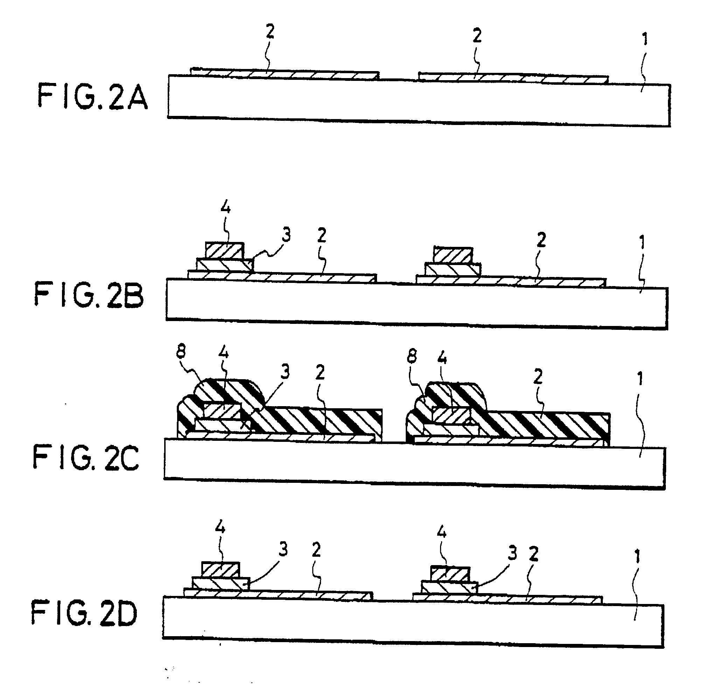

An embodiment of the present invention will be described with reference to Figures 1 and 2 of the accompanying drawings, which are plan and sectional views illustrating an order of manufacturing steps for producing a non-linear resistive element array.

The manufacturing method of the invention comprises depositing a first conductive layer on a substrate 1 and selectively forming the layer in a desired pattern so as to provide picture element electrodes 2 (Figures 1A and 2A), depositing a non-linear resistive layer 3 on the substrate 1 and the picture element electrodes 2, depositing a second conductive layer 4 on the non-linear resistive layer 3, forming the non-linear resistive layer 3 and the second conductive layer 4 in a desired pattern (Figures 1B and 2B), and etching the picture element electrodes 2 and the second conductive layer 4 so as to form them in a desired shape, the etching process using a resist layer 8 (Figures 1C, 1D, 2C and 2D).

The first conductive layer for the picture element electrodes 2 is preferably made of a light transmissive conductive material, e.g. ITO (indium-tin oxide), $SnO_2$ or $In_2O_3$.

The substrate 1 is preferably made of a light transmissive insulating material, e.g. glass, quartz, plastics or ceramics.

The non-linear resistive layer 3 may be formed by plasma CVD, CVD, sputtering, or the like and the layer may be made of silicon oxide, silicon nitride, silicon oxynitride, silicon carbide, germanium oxide or germanium nitride, in which the content of the silicon or germanium is greater than the stoichiometric ratio.

The second conductive layer 4 may be made of Cr, Al, Au-Cr, Mo, Ta, Ni-Cr alloy, ITO or the like.

The resist layer 8 may be made of a positive or negative resist material, e.g. "OFPR 800" (positive) or "OMR-85" (negative) produced by Tokyo Ohka Kogyo Co. Ltd., or "FH-2000" (positive) produced by FUJI-HUNT Electronics Technology Co. Ltd.

Referring now to Figure 1A and Figure 2A, a first conductive film of ITO or the like is deposited on a substrate 1 which is made of a transparent insulator such as glass or quartz, and picture element electrodes 2 are formed therefrom by a first photo-lithographic step (involving coating the transparent conductive film with a resist → aligning a mask → exposure to light → developing → etching → removing the resist). A short circuiting portion 5 between picture element electrodes 2, or an unetched remainder 6, can appear due to foreign matter adhering to the substrate 1 before or during the first photo-lithographic step, foreign matter adhering to the mask, foreign matter mixing in the resist, or foreign matter adhering during the etching, or the like.

Next, a non-linear resistive film 3 is deposited by plasma CVD equipment, sputtering equipment or the like, a second conductive film such as a metal film 4 is continuously deposited by the sputtering equipment or the like, and the metal film 4 and the non-linear resistive film 3 are then patterned by a second photo-lithographic step as shown in Figure 1B and Figure 2B. The second photo-lithographic step is performed such that the patterned metal film 4 lies inside the pattern of the non-linear resistive film 3. In this embodiment, a silicon oxide film, a silicon nitride film, or a silicon carbide film, whose silicon content is higher than the stoichiometric ratio, is used as the non-linear resistive film 3. The non-linear resistive film 3 may also be germanium oxide, germanium nitride or germanium carbide.

Again, unetched remainders 7 may appear in the metal film 4 due to foreign matter or the like. The non-linear resistive element array produced according to the prior art is complete at this point.

The non-linear resistive element array produced according to the invention may at this point differ from the conventional array in the size of the non-linear resistive film 3 being almost the same as that of the metal film 4.

Figure 1C and Figure 2C show a state after developing of a third photo-lithographic step. A resist 8 is formed so as to cover the picture element electrodes 2, the non-linear resistive film 3 and the metal film 4, which constitute the non-linear resistive element array.

Next, the short circuiting portion 5 between the picture element electrodes, the unetched remainder 6 and the unetched remainders 7 of the metal film 4 are etched, whereupon the resist is removed as shown in Figure 1D and Figure 2D. In an example employing ITO film as the picture element electrodes 2 and Cr film as the metal film 4, the unetched remainders 7 of the metal film 4 were etched using a mixed acid (perchloric acid + ceric ammonium nitrate + water) as an etchant and under the same conditions as those employed in the case of etching the metal film 4. In addition, the short circuiting portion 5 and the unetched remainder 6 of the picture element electrodes 2 were etched with a mixed solution consisting of ferric chloride and hydrochloric acid and under the same conditions as those employed in the case of etching the pixel electrodes 2. As may be seen from Figure 1D and Figure 2D, the short circuiting portion 5 between the picture element electrodes 2 and the unetched remainders 7 of the metal film 4 are removed by the etching.

After the non-linear resistive element has been formed as described thus far, parts necessary for a display are covered with a resist again, the the conductive materials are only etched under the same conditions as in the respective preceding steps, whereby to remove parts unnecessary for the display.

As described above, the present invention features a method of manufacturing a non-linear resistive element array including etching the unetched remainders and short circuiting portions of picture element electrodes and conductive film again after the initial formation of the non-linear resistive element array, thereby making it possible to avoid the short circuiting occurring in the prior art between the picture element electrodes and the metal film left unetched. Thus, the invention is very effective in reducing the occurrence of pixel defects and enhancing the available percentage of the array.

## Claims

1. A method of manufacturing a non-linear resistive element array, comprising forming on a substrate (1) an array of non-linear resistive elements, each having a picture element electrode (2), a non-linear resistive layer (3) on the picture element electrode, and a conductive layer (4) on the non-linear resistive layer, and characterised by etching the picture element electrodes and the conductive layer effective to form them in a desired shape by removing unnecessary parts.

2. A method as claimed in claim 1 characterised in that the step of forming the array comprises depositing a first conduotive layer on the substrate and selectively forming the first conductive layer in a desired pattern by a photo-etching process to form the picture element electrodes, depositing the non-linear resistive layer on the picture element electrodes and a second conductive layer on the non-linear resistive layer successively, and selectively forming the non-linear resistive layer and the second conductive layer in a desired pattern by a further photo-etching process.

3. A method as claimed in claim 1 or 2 characterised in that the non-linear resistive layer comprises a non-stoichiometric compound of silicon oxide, silicon nitride, silicon oxynitride, silicon carbide, germanium oxide, germanium nitride or germanium carbide.

4. A method as claimed in claim 2 characterised in that the first conductive layer is formed from ITO, $SnO_2$ or $In_2O_3$.

5. A method as claimed in claim 2 or 4 characterised in that the second condutive layer is formed from Cr, Al, Au-Cr alloy, Mo, Ta, Ni-Cr alloy or ITO.

6. A method as claimed in claim 2, 4 or 5 charac terised in that the non-linear resistive layer is formed by plasma CVD, CVD or sputtering.

7. A method as claimed in claim 2, 4, 5 or 6 characterised in that the size of the non-linear resistive layer is larger than that of the second conductive layer.

8. A method as claimed in claim 2, 4, 5 or 6 characterised in that the size of the non-linear resistive layer is almost the same as that of the second conductive layer.

FIG. 1A

FIG. 1B

FIG. 1C

FIG. 1D

FIG.2A

FIG.2B

FIG.2C

FIG.2D

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | PATENT ABSTRACTS OF JAPAN, vol. 11, no. 112 (P-565), 9th April 1987; & JP-A-61 260 219 (SEIKO INSTR. & ELECTRONICS LTD) 18-11-1986 * Whole document * | 1 | G 02 F  1/136 <br> H 01 C  7/10 |
| A | PATENT ABSTRACTS OF JAPAN, vol. 7, no. 113 (P-197), 18th May 1983; & JP-A-58 034 428 (SUWA SEIKOSHA K.K.) 28-02-1983 * Whole document * | 1 | |
| A | PATENT ABSTRACTS OF JAPAN, vol. 10, no. 58 (E-386), 7th March 1986; & JP-A-60 210 881 (CITIZEN TOKEI K.K.) 23-10-1985 * Whole document * | 1 | |
| A | PATENT ABSTRACTS OF JAPAN, vol. 12, no. 125 (P-691), 19th April 1988; & JP-A-62 250 422 (MATSUSHITA ELECTRIC IND. CO., LTD) 31-10-1987 * Whole document * | 1 | |

TECHNICAL FIELDS SEARCHED (Int. Cl.5)

G 02 F

The present search report has been drawn up for all claims

| Place of search | Date of completion of the search | Examiner |
|---|---|---|
| THE HAGUE | 07-08-1990 | LOFFREDO A. |